Europäisches Patentamt

European Patent Office

Office européen des brevets

(11) Veröffentlichungsnummer : **0 008 140**
**B1**

(12)

# EUROPÄISCHE PATENTSCHRIFT

(45) Veröffentlichungstag der Patentschrift :
22.09.82

(51) Int. Cl.³ : **C 21 B 13/08**

(21) Anmeldenummer : **79200399.8**

(22) Anmeldetag : **17.07.79**

(54) **Verfahren zur Direktreduktion von eisenoxidhaltigen Materialien.**

(30) Priorität : **16.08.78 DE 2835866**

(43) Veröffentlichungstag der Anmeldung :
**20.02.80 (Patentblatt 80/04)**

(45) Bekanntmachung des Hinweises auf die Patenterteilung : **22.09.82 Patentblatt 82/38**

(84) Benannte Vertragsstaaten :
**AT BE DE FR GB IT SE**

(56) Entgegenhaltungen :
**DE A 2 162 302**
**DE A 2 501 182**
**FR A 1 572 081**
**FR A 2 148 619**
**US A 3 046 106**
**US A 3 331 679**

(73) Patentinhaber : **METALLGESELLSCHAFT AG**
**Reuterweg 14 Postfach 3724**
**D-6000 Frankfurt/M.1 (DE)**

(72) Erfinder : **Serbent, Harry, Dr. Dipl.-Ing.**
**Gustav-Hoch-Strasse 5**
**D-6450 Hanau (DE)**
Erfinder : **Schnabel, Wolfram, Dr. Dipl.-Ing.**
**Goethestrasse 7**
**D-6234 Hattersheim (DE)**
Erfinder : **Reuter, Gerhard, Dr. Dipl.-Ing.**
**Steinhauserstrasse 15**
**D-6000 Frankfurt/Main 70 (DE)**

(74) Vertreter : **Fischer, Ernst, Dr.**
**Reuterweg 14**
**D-6000 Frankfurt am Main 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Imprimerie Jouve, 18, rue St-Denis, 75001 Paris, France

# 0 008 140

## Verfahren zur Direktreduktion von eisenoxidhaltigen Materialien

Die Erfindung betrifft ein Verfahren zur Direktreduktion von eisenoxidhaltigen Materialien, vorzugsweise Eisenerzen, zu Schwammeisen unterhalb des Erweichungs- und Schmelzpunktes der Beschickung in einem Drehrohrofen unter Chargierung von festen kohlenstoffhaltigen Reduktionsmitteln mit einem hohen Gehalt an flüchtigen Bestandteilen in das Beschickungsende des Drehrohrofens, Zufuhr von sauerstoffhaltigen Gasen mittels Mantelrohren in geregelten Mengen in den freien Ofenraum, und wobei die Beschickung und die Gasatmosphäre im Drehrohrofen im Gegenstrom zueinander geführt werden.

Bei der Erzeugung von Schwammeisen im Drehrohrofen mittels fester, kohlenstoffhaltiger Reduktionsmittel besteht die Gefahr der Reoxidation des gebildeten Schwammeisens in dem Schlußteil der Reduktionszone, wenn dort nicht ein Überschuß an festem Reduktionsmittel in der Beschickung vorliegt, der im Bett eine im Bezug auf den Eisenschwamm reduzierende Atmosphäre aufrechthält. Deshalb wird im allgemeinen mit einem relativ hohen Kohlenstoffüberschuß gearbeitet. Der Überschuß an Reduktionsmitteln muß abgetrennt und sollte aus wirtschaftlichen Gründen in den Drehrohrofen zurückgeführt werden. Das Reduktionsmittel neigt jedoch zumeist dazu, während der Ofenreise aufgrund seiner großen Oberfläche andere, insbesondere feinkörnige Beschickungskomponenten anzulagern, wodurch der Schmelzpunkt der Kohlenasche oft bis unter die Reduktionstemperatur erniedrigt wird. Dadurch können Ofenansätze entstehen. Weiterhin nimmt der Überschuß an Reduktionsmittel bzw. der Rücklauf aufgrund seines niedrigen Schüttgewichtes, verglichen mit der Metallkomponente, ein relativ großes Ofenvolumen ein, das für den Durchsatz an Metallkomponente verloren geht, weil es die Verweilzeit der Metallkomponente verringert. Außerdem muß in jedem Falle das umlaufende Reduktionsmittel auf Reduktionstemperatur gebracht werden und im Austrag wieder abgekühlt werden. Dadurch ergibt sich eine längere Aufheizzeit, größerer Wärmeverbrauch und eine größere Austragsmenge, die abgekühlt werden muß.

In der DE-A-19 42 541 wurde auch bereits vorgeschlagen, als Reduktionsmittel hochreaktive Kohlen zu verwenden, die bei der Ofentemperatur zerfallen, diese Kohlen vom Austragsende einzublasen und mindestens über die Länge der Reduktionszone zu verteilen, und die Durchsatzleistung des Drehrohrofens so einzustellen, daß bei dem gewünschten Metallisierungsgrad der Kohlenstoffgehalt im Austrag unter 1,5 %, bezogen auf den Einsatz an eisenoxidhaltigem Material, liegt. Bei einer Senkung des Überschusses auf nur an Schwammeisen angelagerten Kohlenstoff müssen bei Schwankungen im Ofenbetrieb zur Sicherheit darüberhinaus 0,1 bis 0,7 % freier Kohlenstoff im Ofenaustrag eingehalten werden. Zur Erzielung dieser niedrigen Überschüsse muß das Reduktionsmittel entsprechend dem Sauerstoffabbau über die Reduktionszone verteilt werden, daß überall gerade so viel Kohle zur Verfügung steht, wie örtlich benötigt wird. Diese genaue Verteilung erfordert insbesondere bei großen Drehrohröfen einen beträchtlichen Aufwand für die Beschickungsorgane und deren Regelung. Außerdem muß die Kohle immer in gleicher Korngrößenverteilung vorliegen. Weiterhin dürfen keine kurzzeitigen Betriebsschwankungen des Ofenbetriebes eintreten, da sonst mit einem größeren Sicherheitsüberschuß gearbeitet werden muß.

Aus der DE-B-10 32 550 ist es bekannt, die bei der Reduktion mit festen Reduktionsmitteln ablaufenden Reaktionen in der Beschickung dadurch zu beschleunigen, daß Luft oder reduzierende Gase durch die von einem Zentralbrenner auf Reduktionstemperatur gebrachte Beschickung zu blasen. Eine Verringerung des erforderlichen Kohlenstoffüberschusses wird nicht beschrieben und auch nicht erzielt.

Aus der US-A-31 80 725 ist es bekannt, das feste, kohlenstoffhaltige Reduktionsmittel erst in einem gewissen Abstand vom Beschickungsende in den Ofen zu chargieren, wobei ein Überschuß zugegeben wird, der eventuell aus dem Austrag abgetrennt und wieder zurückgeführt wird. Dabei kann gasförmiges oder flüssiges Reduktionsmittel in der Reduktionszone in die Beschickung geblasen werden und zur Erzeugung des festen Kohlenstoffs benutzt werden. Der erforderliche Überschuß wird dadurch nicht berührt.

Auch die DE-C-12 26 126 erzeugt durch Einleiten von Kohlenwasserstoffen zusammen mit Luft in das Beschickungsbett einen Kohlenstoffüberschuß im Austragsgut.

Die DE-B-12 73 549 beschreibt die Erzeugung von schwefelarmem Schwammeisen durch Einblasen von gasförmigen oder flüssigen Wasserstoff abspaltende Stoffe in die Beschickung in der Reduktionszone. Der erforderliche Kohlenstoffüberschuß wird dadurch nicht verringert.

In der US-A-26 63 632 wird eine zweistufige Reduktion beschrieben, bei der in der ersten Stufe eine Metallisierung von 50 bis 80 % mittels festem Reduktionsmittel erfolgt und die weitere Reduktion in einem separaten Ofen mittels reduzierender Gase erfolgt, die dabei den Eisenschwamm gleichzeitig abkühlen. Dazu sind zwei Aggregate mit einer aufwendigen Übergabe notwendig. Bei einer Ausnutzung der Gase aus der zweiten Stufe in der ersten Stufe kann nur Koks als festes Reduktionsmittel verwendet werden.

Aus der DE-A-21 46 133 und der US-A-31 82 980 ist es bekannt, die Reduktion von Pellets entweder ganz mittels Kohlenwasserstoffen durchzuführen oder in die Pellets Kohle in Pulverform oder Staubform einzupelletieren, die dann einen Teil der Brennstofferfordernisse deckt. Die Kohlenwasserstoffe werden mittels Düsensteinen in die Beschickung in der Reduktionszone eingebracht und zwar beginnend an der Stelle des Ofens, wo die Beschickung etwa die Reduktionstemperatur erreicht hat. In den freien Ofenraum werden mittels der Düsensteine oxidierende Gase eingeblasen. Diesen Verfahren fehlen die Vorteile, die mit der Zugabe von festem Reduktionsmittel zu der Beschickung erzielt werden. Diese Zugabe bewirkt nämlich, daß in Längsrichtung des Drehrohrofens das Reduktionsmittel überall gleichmäßig verteilt ist und gleichmäßig wirkt, und außerdem wird die Schüttung aufgelockert und der Beginn des Sinterns infolge direkten Kontaktes von Schwammeisenoberflächen hochgesetzt. Weiterhin hat das Einblasen von Luft mittels Düsensteinen den Nachteil, daß die Flammen an der Ofenwandung entstehen.

Aus der DE-A-25 01 182 ist es bekannt, hochreaktive feste, kohlenstoffhaltige Reduktionsmittel mit einem Gehalt von 20 bis 50 % an flüchtigen Bestandteilen in agglomerierter Form in das Beschickungsende des Drehrohrofens zu chargieren und mit einer Geschwindigkeit aufzuheizen, daß sie im wesentlichen in und bis zum Ende der Aufheizzone des Drehrohrofens in eine feinkörnige Korngröße zerfallen. Dabei kann der erforderliche Kohlenstoffgehalt im Austragsmaterial unter 1 %, bezogen auf den Einsatz an eisenoxidhaltigem Material, gehalten werden, insbesondere wenn eine reduzierende Flamme durch einen mit Öl oder Gas und Luftunterschuß betriebenen Zentralbrenner in der Endzone der Reduktionszone aufrechtgehalten wird.

Der Erfindung liegt die Aufgabe zugrunde, bei der Erzeugung von Schwammeisen mittels fester, kohlenstoffhaltiger Reduktionsmittel die Reoxidation des gebildeten Schwammeisens im Schlußteil der Reduktionszone des Drehrohrofens mit möglichst geringem Überschuß an festem Kohlenstoff mit einfachen Mitteln und mit Sicherheit zu vermeiden.

Die Lösung dieser Aufgabe erfolgt erfindungsgemäß dadurch, daß in den Schlußteil der Reduktionszone, beginnend mit mindestens 75 % Metallisierung der Eisenoxide, reduzierende Gase und/oder flüssige Kohlenwasserstoffe mittels Düsenstöcken mindestens teilweise in die über Düsenstöcken befindliche Beschickung in geregelten Mengen eingebracht werden, wobei die Menge an festem kohlenstoffhaltigem Reduktionsmittel in dem Schlußteil der Reduktionszone und die dort eingebrachte Menge an reduzierenden Gasen und/oder Öl so eingestellt wird, daß bei der gewünschten End-Metallisierung keine Reoxidation des Eisenschwamms erfolgt und im Austrag praktisch kein freier fester Kohlenstoff vorhanden ist. Ein Teil der reduzierenden Gase und/oder flüssigen Kohlenwasserstoffe kann über die Düsenstöcke in den freien Ofenraum des Schlußteiles der Reduktionszone eingebracht werden. Dadurch wird eine Kühlung der Zufuhrleitungen erzielt. Dazu genügt bereits die Durchleitung geringer Mengen. Unter dem Ausdruck « freier Kohlenstoff » ist solcher Kohlenstoff zu verstehen, der nicht an dem Schwammeisen angelagert ist.

Unter der Metallisierung ist das Verhältnis von gesamtem Eisen zu metallischem Eisen in der Beschickung zu verstehen.

Unter dem Ausdruck « Düsenstöcke » sind Zuführungsvorrichtungen zu verstehen, welche die Ofenwand und die feuerfeste Auskleidung des Drehrohrofens durchdringen und deren Austrittsöffnungen in der Ebene der inneren Oberfläche der feuerfesten Auskleidung oder kurz darüber oder darunter liegen. Die Düsenstöcke können aus keramischen oder metallischen Werkstoffen bestehen. An der Stelle, wo die Metallisierung mindestens 75 % erreicht hat, werden erstmalig reduzierende Gase und/oder flüssige Kohlenwasserstoffe mittels Düsenstöcken in die Beschickung eingebracht. In bestimmten Abständen von etwa 1,5 bis 3,5 m sind dann im Schlußteil der Reduktionszone weitere Düsenstöcke angeordnet. Diese Abstände reichen im allgemeinen aus, um genügend reduzierende Stoffe in das Bett einblasen zu können ohne die Konstruktion des Ofens zu schwächen. Die Düsenstöcke können an jeder Einblasstelle ringförmig in bestimmten Abständen in radialer Richtung über den Umfang des Ofens verteilt angeordnet sein, wobei die Abstände auf dem Umfang im allgemeinen ebenfalls 1,5 bis 3,5 m betragen. Die Düsenstöcke können auch spiralförmig auf dem Ofenmantel angeordnet sein. Durch Steuermechanismen werden jeweils nur die Düsenstöcke mit reduzierenden Gasen und/oder flüssigen Kohlenwasserstoffen beaufschlagt, die sich unter der Beschickung befinden, wenn die Gesamtmenge nur in die Beschickung eingebracht wird. In jedem Fall ist ein Düsenstock kurz vor dem Austragsende des Drehrohrofens angeordnet. Reduzierende Gase werden eingeblasen und flüssige Kohlenwasserstoffe — wie Öl — werden unter Druck eingespritzt oder eingedüst.

Die zur Verbrennung erforderlichen sauerstoffhaltigen Gase — im allgemeinen Luft — werden mittels Mantelrohre in den freien Ofenraum eingeleitet. Die Mantelrohre sind über die Länge des Drehrohrofens verteilt in radialer Richtung angeordnet. Ihre Austrittsöffnungen liegen etwa in der Mitte des Querschnittes des Ofens und sind parallel zu der Längsachse des Ofens angeordnet. Die Austrittsöffnungen werden also nicht von der Beschickung bedeckt, so daß pro Einblasstelle jeweils nur ein Mantelrohr notwendig ist. Auch im Schlußteil der Reduktionszone liegt noch ein Teil des aufgegebenen festen Reduktionsmittels vor und dient als Reduktionsmittel. Das in das Beschickungsende des Drehrohrofens chargierte feste, kohlenstoffhaltige Reduktionsmittel hat einen Gehalt an flüchtigen Bestandteilen von mindestens 20 % bezogen auf trockene Substanz. Solche Reduktionsmittel sind in erster Linie Braunkohlen und subbituminöse Kohlen. Die Menge des eingebrachten reduzierenden Gases und/oder der flüssigen Kohlenwasserstoffe wird so eingestellt, daß an der Oberfläche der Beschickung ein Schleier von reduzierenden Gasen aufrechtgehalten wird, der eine Reoxidation des gebildeten Schwammeisens verhindert. Der Ausdruck « reduzierend » ist immer in Bezug auf das metallische Eisen zu verstehen.

Eine vorzugsweise Ausgestaltung besteht darin, daß die reduzierenden Gase und/oder flüssigen Kohlenwasserstoffe in den Schlußteil der Reduktionszone eingebracht werden, der mit mindestens 80 % Metallisierung beginnt. Dadurch kann die Reoxidation mit wenig Aufwand verhindert werden.

Eine vorzugsweise Ausgestaltung besteht darin, daß das Schwammeisen in dem Schlußteil der Reduktionszone durch die eingebrachten reduzierenden Gase und/oder flüssigen Kohlenwasserstoffe auf bis zu etwa 2 % aufgekohlt wird. Dies wird durch ein entsprechendes Angebot an Kohlenstoff in den eingebrachten reduzierenden Gasen und/oder flüssigen Kohlenwasserstoffen erzielt. Dadurch liegt der für die restliche Reduktion des Schwammeisens in den nachfolgenden schmelzflüssigen metallurgischen Verfahren notwendige Kohlenstoff in idealer Verteilung vor.

Eine vorzugsweise Ausgestaltung besteht darin, daß in dem Bereich der Aufheizzone des Drehrohrofens, der mit dem Auftreten zündfähiger Teilchen des festen Reduktionsmittels beginnt und vor der Reduktionszone endet, säuerstoffhaltige Gase mittels Düsenstöcken in die über Düsenstöcken befindliche Beschickung in geregelten Mengen eingeblasen werden, und mindestens in diesem Bereich der Aufheizzone in den freien Ofenraum sauerstoffhaltige Gase mittels Mantelrohren in geregelten Mengen eingeblasen werden. Die Düsenstöcke werden in der beschriebenen Weise angeordnet. Dadurch wird die Aufheizzone des Drehrohrofens wesentlich verkürzt, die Differenz zwischen der Gastemperatur und Bettemperatur auf ein Minimum herabgesetzt, der Gesamtenergieverbrauch wesentlich vermindert, weil der Wärmeinhalt der flüchtigen, brennbaren Bestandteile des Reduktionsmittels weitgehend ausgenutzt wird, die Gastemperatur im freien Ofenraum und damit in den Abgasen gesenkt wird, und die unmittelbare Kohlenstoffvergasung auf der Oberfläche des Bettes durch Vermeidung des hier sonst möglichen Wärmestaues vermindert wird. Das erste Auftreten zündfähiger Teilchen des Reduktionsmittels erfolgt im unteren Teil der abrollenden Oberfläche der Beschickung. Während des Herunterrrollens der einzelnen Teilchen auf der Oberfläche des Rollbettes werden die Teilchen von den heißen Ofengasen aufgeheizt und erreichen in einem bestimmten Abstand vom Beschickungsende kurz vor dem Einziehen in das Rollbett erstmalig die Zündtemperatur. An dieser Stelle werden dann erstmalig sauerstoffhaltige Gase mittels Düsenstöcken in die Beschickung geblasen. Dadurch wird erreicht, daß die zündfähigen und gezündeten Teilchen des Reduktionsmittels bei ihrem Einziehen in das kältere Innere des Rollbettes nicht wieder unter die Zündtemperatur abgekühlt werden, sondern im Inneren des Rollbettes weiterbrennen. Die nunmehr innerhalb der Beschickung ablaufende Verbrennung bewirkt in der Art einer Kettenreaktion die Freisetzung weiterer flüchtiger brennbarer Bestandteile und erfaßt in kurzer Zeit den gesamten Beschickungsquerschnitt. Der Wärmeinhalt der flüchtigen brennbaren Bestandteile wird nunmehr voll für die Beschickung ausgenutzt und die zur Wärmeübertragung verfügbare Wärmeaustauschfläche erheblich vergrößert.

Eine vorzugsweise Ausgestaltung besteht darin, daß der Bereich der Aufheizzone bei einer Temperatur des Reduktionsmittels von etwa 300 °C beginnt und bei einer Temperatur der Beschickung von 800 bis 950 °C endet. Die untere Temperatur des Reduktionsmittels wird — wie vorhergehend beschrieben — im unteren Teil der Oberfläche des von der Beschickung gebildeten Rollbettes gemessen, d.h. kurz vor dem Einziehen der Teilchen in das Rollbett. Die obere Temperatur ist die durchschnittliche Temperatur des gesamten Rollbettes der Beschickung, da bei dieser Temperatur bereits ein weitgehender Temperaturausgleich im Rollbett stattgefunden hat. Durch die Wahl dieses Temperaturbereichs wird besonders sichergestellt, daß im unteren Bereich kein Kaltblasen der Beschickung erfolgt und im oberen Bereich die Austreibung der flüchtigen Bestandteile weitgehend abgeschlossen ist.

Eine vorzugsweise Ausgestaltung besteht darin, daß in den Bereich der Aufheizzone 40 bis 70 % der gesamten in den Drehrohrofen eingeleiteten Sauerstoffmenge eingeblasen werden. Dadurch wird eine besonders gute Aufheizgeschwindigkeit erreicht.

Eine vorzugsweise Ausgestaltung besteht darin, daß von der in den Bereich der Aufheizzone eingeblasenen Menge an Sauerstoff 10 bis 60 % durch die Düsenstöcke in die Beschickung und der Rest durch die Mantelrohre in den freien Ofenraum eingeblasen werden. Dadurch wird eine schnelle Aufheizung und eine weitgehende Verbrennung der brennbaren gasförmigen Bestandteile im freien Ofenraum erreicht.

Eine vorzugsweise Ausgestaltung besteht darin, daß hochreaktive feste, kohlenstoffhaltige Reduktionsmittel mit einem Gehalt von 20 bis 50 % an flüchtigen brennbaren Bestandteilen in brikettierter Form in das Beschickungsende des Drehrohrofens chargiert werden und mit einer Geschwindigkeit aufgeheizt werden, daß sie im wesentlichen in und bis zum Ende der Aufheizzone des Drehrohrofens in eine feinkörnige Korngröße zerfallen. Dadurch können solche Reduktionsmittel in wirtschaftlicher und technisch einfacher Weise eingesetzt werden, wobei ihre flüchtigen Bestandteile optimal im Drehrohrofen ausgenutzt werden, die Staubverluste im Abgas gering sind und optimale Betriebsbedingungen mit hohem Durchsatz erzielt werden. Der Kohlenstoffabbrand wird insbesondere in Verbindung mit der vorher beschriebenen Aufheizung in der Aufheizzone beträchtlich verringert. Der Zerfall der Agglomerate in und bis zum Ende der Aufheizzone des Drehrohrofens wird so gesteuert, daß auf der ganzen Länge der Aufheizzone ein Zerfall erfolgt und nicht alle Agglomerate bereits im Anfangsteil der Aufheizzone vollständig zerfallen. Die Reduktionszone beginnt etwa an der Stelle des Drehrohrofens, wo die Temperatur der Beschickung die Reduktionstemperatur erreicht hat und praktisch konstant bleibt. Natürlich tritt auch vor der so definierten Reduktionszone bereits eine Reduktion zu niederen Eisenoxiden ein. Der Zerfall in der Aufheizzone soll auf eine für die Reduktion günstige Korngröße erfolgen, d.h. möglichst klein und unter 5 mm und auf jeden Fall unter 8 mm. Ein geringer Zerfall oder ein weiterer Zerfall in der Reduktionszone stört nicht.

4

Unter hochreaktiven Kohlen sind solche Kohlen zu verstehen, deren Kohlenstoff sich mit $CO_2$ gemäß der Boudouard-Reaktion $CO_2 + C \rightarrow 2\,CO$ bei 1 000 °C nahezu theoretisch umsetzt. Die praktische Bestimmung der Reaktivität erfolgt durch Überleiten von $CO_2$-Gas bei 1 000 °C über Kohle, die bei 1 000 °C entgast wurde. Der Abbau des Kohlenstoffs durch die Reaktion von $CO_2$ zu CO in der Zeiteinheit wird gemessen und in $cm^3$ CO/Gramm C · °C · sec ausgedrückt.

Man erhält z.B. für Anthrazite Werte unter 1, für Gasflammkohlen Werte zwischen 1 und 2 und für die erfindungsgemäß verwendeten Kohlen Werte über 3, vorzugsweise über 5. Diese hohe Reaktivität gestattet einen praktisch vollständigen Abbau des Kohlenstoffes zum Zwecke der Reduktion.

Eine vorzugsweise Ausgestaltung besteht darin, daß die Stückgröße der Briketts überwiegend 1 bis 7 cm beträgt. Dieser Größenbereich ergibt sehr gute Betriebsbedingungen. Die Briketts werden zwar alle in diesem Bereich hergestellt, zerfallen aber zum Teil beim Transport, so daß ein Teil mit einer Korngröße unter 1 cm vorliegt.

Eine vorzugsweise Ausgestaltung besteht darin, daß die Aufheizgeschwindigkeit der Briketts in der Aufheizzone 9 bis 15 °C/min. beträgt. Bei dieser Aufheizgeschwindigkeit wird die Schwelung der Agglomeration des Reduktionsmittels im Vergleich zu denselben nicht-agglomerierten Reduktionsmitteln verzögert, wodurch eine gleichmäßigere Schwelung über die Aufheizzone verteilt erfolgt. Dadurch ist der Wärmeverbrauch geringer. In diesem Bereich erfolgt der Zerfall des agglomerierten Reduktionsmittels in besonders günstiger Weise. Außerdem ergeben scih in diesem Bereich geringere Staub- und Abbrandverluste.

Die Erfindung wird anhand von Ausführungsbeispielen näher erläutert.

## Beispiel 1

In einem Drehrohrofen mit den Abmessungen 0,8 m Innendurchmesser und 12 m Länge wurde eine bituminöse Kohle mit 48 % $C_{fix}$, 28 % flüchtige Bestandteile sowie 24 % Asche zusammen mit Pellets von 67 % Fe und einer Größe von 6-15 mm aufgegeben.

Betriebsbedingungen ohne Gaszusatz :

| | |
|---|---|
| Pelletaufgabe : | .400 kg/h |
| Kohlenstoffaufgabe, trocken : | 250 kg/h |
| $C_{fix}$/Fe-Einlauf : | 0,48 |
| $C_{fix}$/Fe-Auslauf : | 0,07 |

Temperaturen im Ofenauslaufbereich :

| | |
|---|---|
| Gastemperatur : | 1 180 °C |
| Guttemperatur : | 1 020 °C |

| Eisenschwammqualität | | Entnahmestelle 1,65 m vor Austrag |
|---|---|---|
| Metallisierung | 86 % | 75 % |
| C-Gehalt | 0,15 % | 0,13 % |
| Anteil + 15 mm | 10 % | n.b. |

Bei Zugabe von 15 $Nm^3$/h Erdgas in den Schlußteil der Reduktionszone nach 75 % Metallisierung, wovon ca. 60 % in die Schüttung und 40 % in den Gasraum gegeben wurden, stieg die Metallisierung des Produktes im Ofenaustrag auf 94 % und der C-Gehalt im Schwamm auf 0,6 % an. Die Gastemperatur betrug 1 140 °C, die Guttemperatur 980 °C, der Anteil + 15 mm reduzierte sich auf unter 2 %. Das $C_{fix}$/Fe-Verhältnis im Ofenaustrag stieg auf 0,11. Im Anschluß daran wurde die Erzmenge auf 450 kg bei sonst gleichen Verhältnissen erhöht. Das $C_{fix}$/Fe-Verhältnis am Einlauf lag dabei bei 0,40. Gut- und Gastemperaturen wurden durch Lufterhöhung konstant gehalten. Das $C_{fix}$-Verhältnis im Ofenaustrag verringerte sich ohne Anstieg der Agglomerate auf 0,04 $C_{fix}$/Fe, wobei die Metallisierung geringfügig auf 91 % absank. Der C-Gehalt im Eisenschwamm ging auf etwa 0,30 % zurück.

## Beispiel 2

In dem unter Beispiel 1 erwähnten Ofen wurde bei gleichem Erzträger anstatt der bituminösen Kohle eine Braunkohle mit 44 % $C_{fix}$, 51 % flüchtige Bestandteile und 5 % Asche eingesetzt.

Betriebsbedingungen ohne Gaszusatz :

| | |
|---|---|
| Pelletaufgabe : | 600 kg/h |
| Kohlenaufgabe, trocken : | 385 kg/h |
| $C_{fix}$/Fe-Einlauf : | 0,420 |
| $C_{fix}$/Fe-Auslauf : | 0,01 |

Temperaturen im Ofenauslaufbereich :
Gastemperatur : 1 120 °C
Guttemperatur : 940 °C

| Eisenschwammqualität | Entnahmestelle 1,65 m vor Ofenende | Ofenauslauf |
|---|---|---|
| Metallisierung | 93 % | 91 % |
| C-Gehalt | 0,15 % | 0,11 % |
| Anteil + 15 mm | n.b. | 5 % |

Bei Zugabe derselben Menge Gas wie unter Beispiel 1 beschrieben, ergaben sich unter sonst gleichen Betriebsbedingungen die folgenden Daten :

Gastemperatur 1 090 °C
Guttemperatur 925 °C
$C_{fix}$/Fe-Auslauf 0,02

| Eisenschwammqualität | Entnahmestelle 1,65 m vor Ofenende | Ofenaustrag |
|---|---|---|
| Metallisierung | 97 % | 99 % |
| C-Gehalt | 0,65 % | 0,93 % |

Die Pelletmenge wurde stufenweise um je 25 kg unter sonst gleichen Verhältnissen bis auf 700 kg/h erhöht. Bei 700 kg/h wurde erstmalig Reoxydation des Eisenschwamms und Agglomeratbildung festgestellt. Das $C_{fix}$/Fe-Verhältnis im Austrag fiel auf Null ab, der C-Gehalt im Schwamm lag bei etwa 0,08 %.

Die Vorteile der Erfindung bestehen darin, daß kein oder nur ein geringer Überschuß an festem Kohlenstoff im Austrag vorliegen muß und trotzdem mit Sicherheit eine Reoxidation des Schwammeisens verhindert wird. Die Durchsatzleistung des Drehrohrofens wird gesteigert und der Energieverbrauch gesenkt. Die Magnetscheidung des Ofenaustrages zur Abtrennung des überschüssigen Kohlenstoffs kann entfallen. Der Heißeinsatz des Ofenaustrages in Schmelzöfen ist durch den Wegfall der unmagnetischen Fraktion unproblematisch.

### Ansprüche

1. Verfahren zur Direktreduktion von eisenoxidhaltigen Materialien, vorzugsweise Eisenerzen, zu Schwammeisen unterhalb des Erweichungs- und Schmelzpunktes der Beschickung in einem Drehrohrofen unter Chargierung von festen, kohlenstoffhaltigen Reduktionsmitteln mit einem hohen Gehalt an flüchtigen Bestandteilen in das Beschickungsende des Drehrohrofens, Zufuhr von sauerstoffhaltigen Gasen mittels Mantelrohren in geregelten Mengen in den freien Ofenraum, und wobei die Beschickung und die Gasatmosphäre im Drehrohrofen im Gegenstrom zueinander geführt werden, dadurch gekennzeichnet, daß in den Schlußteil der Reduktionszone, beginnend mit mindestens 75 % Metallisierung der Eisenoxide, reduzierende Gase und/oder flüssige Kohlenwasserstoffe mittels Düsenstöcken mindestens teilweise in die über Düsenstöcken befindliche Beschickung in geregelten Mengen eingebracht werden, wobei die Menge an festem kohlenstoffhaltigem Reduktionsmittel im dem Schlußteil der Reduktionszone und die dort eingebrachte Menge an reduzierenden Gasen und/oder Öl so eingestellt wird, daß bei der gewünschten End-Metallisierung keine Reoxidation des Eisenschwamms erfolgt und im Austrag praktisch kein freier fester Kohlenstoff vorhanden ist.

2. Verfahren nach Anspruch 1, dadurch gekennzeichnet, daß die reduzierenden Gase und/oder flüssigen Kohlenwasserstoffe in den Schlußteil der Reduktionszone eingebracht werden, der mit mindestens 80 % Metallisierung beginnt.

3. Verfahren nach Anspruch 1 oder 2, dadurch gekennzeichnet, daß das Schwammeisen in dem Schlußteil der Reduktionszone durch die eingebrachten reduzierenden Gase und/oder flüssigen Kohlenwasserstoffe auf bis zu etwa 2 % aufgekohlt wird.

4. Verfahren nach den Ansprüchen 1 bis 3, dadurch gekennzeichnet, daß in dem Bereich der Aufheizzone des Drehrohrofens, der mit dem Auftreten zündfähiger Teilchen des festen Reduktionsmittels beginnt und vor der Reduktionszone endet, sauerstoffhaltige Gase mittels Düsenstöcken in die über Düsenstöcken befindliche Beschickung in geregelten Mengen eingeblasen werden, und mindestens in diesen Bereich der Aufheizzone in den freien Ofenraum sauerstoffhaltige Gase mittels Mantelrohren in geregelten Mengen eingeblasen werden.

5. Verfahren nach Anspruch 4, dadurch gekennzeichnet, daß der Bereich der Aufheizzone bei einer Temperatur des Reduktionsmittels von etwa 300 °C beginnt und bei einer Temperatur der Beschickung von 800 bis 950 °C endet.

6. Verfahren nach den Ansprüchen 4 und 5, dadurch gekennzeichnet, daß in dem Bereich der Aufheizzone 40 bis 70 % der gesamten in den Drehrohrofen eingeleiteten Sauerstoffmenge eingeblasen werden.

7. Verfahren nach den Ansprüchen 4 bis 6, dadurch gekennzeichnet, daß von der in den Bereich der Aufheizzone eingeblasenen Menge an Sauerstoff 10 bis 60 % durch die Düsenstöcke in die Beschickung und der Rest durch die Mantelrohre in den freien Ofenraum eingeblasen werden.

8. Verfahren nach den Ansprüchen 1 bis 7, dadurch gekennzeichnet, daß hochreaktive feste kohlenstoffhaltige Reduktionsmittel mit einem Gehalt von 20 bis 50 % an flüchtigen brennbaren Bestandteilen in brikettierter Form in das Beschickungsende des Drehrohrofens chargiert werden und mit einer Geschwindigkeit aufgeheizt werden, daß sie im wesentlichen in und bis zum Ende der Aufheizzone des Drehrohrofens in eine feinkörnige Korngröße zerfallen.

9. Verfahren nach Anspruch 8, dadurch gekennzeichnet, daß die Stückgröße der Briketts überwiegend 1 bis 7 cm beträgt.

10. Verfahren nach den Ansprüchen 8 und 9, dadurch gekennzeichnet, daß die Aufheizgeschwindigkeit der Briketts in der Aufheizzone 9 bis 15 °C/min beträgt.


## Claims

1. A process of directly reducing iron oxide-containing materials, preferably iron ores, to produce sponge iron in a rotary kiln below the softening and melting point of the charge, comprising charging solid carbonaceous reducing agents having a high content of volatile constituents into a rotary kiln at its charging end, feeding oxygen-containing gases through shell tubes at controlled rates into the free kiln space, and moving the charge and the gas atmosphere in the rotary kiln countercurrently to each other, characterized in that reducing gases and/or liquid hydrocarbons are fed at controlled rates through tubular air nozzles into the final portion of the reduction zone, beginning at a point where at least 75 % of the iron have been metallized, and at least part of said reducing gases and/or liquid hydrocarbons are fed into the charge disposed over tubular air nozzles, the quantity of solid carbonaceous reducing agent in the final portion of the reduction zone and the rate at which reducing gases and/or oil fed into said portion are controlled so that a reoxidation of sponge iron is prevented and the material discharged from the kiln is virtually free from free solid carbon when the desired final metallization has been achieved.

2. A process according to claim 1, characterized in that the reducing gases and/or liquid hydrocarbons are fed into the reduction zone in a final portion thereof which begins where a metallization of at least 80 % has been achieved.

3. A process according to claims 1 or 2, characterized in that the sponge iron is carburized to about 2 % carbon in the final portion of the reduction zone by the reducing gases and/or liquid hydrocarbons which are fed.

4. A process according to claims 1 to 3, characterized in that oxygen-containing gases are blown at controlled rates through tubular air nozzles into the charge disposed over tubular air nozzles in the heating-up zone of the rotary kiln in that region of said zone which begins where the occurrence of ignitable particles of the solid reducing agent begins and which terminates before the reduction zone, and oxygen-containing gases are blown at controlled rates through shell tubes into the free kiln space at least in said region of the heating-up zone.

5. A process according to claim 4, characterized in that said region of the heating-up zone begins where the reducing agent has a temperature of about 300 °C and terminates where the charge has a temperature of 800 to 950 °C.

6. A process according to claims 4 and 5, characterized in that 40 to 70 % of all oxygen fed into the rotary kiln are blown into said region of the heating-up zone.

7. A process according to claims 4 to 6, characterized in that 10 to 60 % of the oxygen blown into said region of the heating-up zone are blown through the tubular air nozzles into the charge and the remainder is blown through the shell tubes into the free kiln space.

8. A process according to claims 1 to 7, characterized in that highly reactive, solid carbonaceous reducing agent briquettes, which contain 20 to 50 % volatile combustible constituents, are charged into the rotary kiln at the charging end thereof and are heated up at such a rate that they disintegrate to a fine-grained material substantially within the heating-up zone of the rotary kiln and up to the end of said zone.

9. A process according to claim 8, characterized in that most of the briquettes have a size of 1 to 7 cm.

10. A process according to claims 8 and 9, characterized in that the briquettes are heated up in the heating-up zone at a rate of 9 to 15 °C/min.


## Revendications

1. Procédé de réduction directe de matières contenant des oxydes de fer, de préférence des minerais de fer, en fer en éponge, sans dépasser les points de ramollissement et de fusion de la charge, dans un four rotatif en chargeant des agents réducteurs solides contenant du carbone et ayant une haute teneur en composés volatils à l'extrémité de chargement du four rotatif et en introduisant dans l'espace libre du four, en des quantités réglées, des gaz contenant de l'oxygène au moyen de tuyaux à enveloppe de protection, la charge et l'atmosphère gazeuse étant amenées à contre-courant dans le four rotatif, caractérisé en ce qu'on introduit dans la partie terminale de la zone de réduction qui commence avec une métallisation d'au moins 75 % des oxydes de fer, des gaz réducteurs et/ou des hydrocarbures liquides au moyen d'un porte-vent, au moins partiellement dans la charge située au-dessus de ces porte-vent, en des quantités réglées, la quantité en agent réducteur solide contenant du carbone, introduite dans la partie terminale de la zone de réduction, et la quantité de gaz réducteurs et/ou d'huile étant réglées de manière que, pour une métallisation finale désirée, il ne se produise aucune réoxydation de l'éponge en fer et qu'il n'y ait pratiquement plus de carbone solide libre dans le produit déchargé.

2. Procédé suivant la revendication 1, caractérisé en ce qu'on introduit les gaz réducteurs et/ou les hydrocarbures liquides dans la partie terminale de la zone de réduction, cette partie commençant avec un degré de métallisation d'au moins 80 %.

3. Procédé suivant l'une des revendications 1 ou 2 caractérisé en ce qu'on pratique dans la partie terminale de la zone de réduction une carburation du fer en éponge jusqu'à environ 2 % par les gaz réducteurs et/ou les hydrocarbures liquides introduits.

4. Procédé suivant les revendications 1 à 3 caractérisé en ce qu'on insuffle en des quantités réglées des gaz contenant de l'oxygène, au moyen de porte-vent, dans la charge se trouvant sur les porte-vent et dans la zone de chauffage du four rotatif qui commence avec l'apparition de particules inflammables de l'agent réducteur et qui se termine avec la zone de réduction et en ce qu'on insuffle au moins dans cette partie de la zone de chauffage, dans l'espace libre du four, des gaz contenant de l'oxygène au moyen de tuyaux à enveloppe de protection en des quantités réglées.

5. Procédé suivant la revendication 4 caractérisé en ce que le domaine de la zone de chauffage commence à une température de l'agent réducteur d'environ 300 °C et se termine à une température de la charge de 800 à 950 °C.

6. Procédé suivant les revendications 4 et 5 caractérisé en ce qu'on insuffle dans le domaine de la zone de chauffage 40 à 70 % de la quantité totale d'oxygène introduite dans le four rotatif.

7. Procédé suivant les revendications 4 à 6 caractérisé en ce que 10 à 60 % de la quantité d'oxygène insufflée dans le domaine de la zone de chauffage sont insufflés dans la charge au moyen de porte-vent et en ce que le reste est insufflé dans l'espace libre du four au moyen de tuyaux à enveloppe de protection.

8. Procédé suivant les revendications 1 à 7 caractérisé en ce qu'on charge des agents de réduction solides hautement réactifs ayant une teneur de 20 à 50 % en composés volatils inflammables sous forme de briquettes à l'extrémité de chargement du four rotatif et en ce que ces agents réducteurs sont chauffés à une vitesse telle que dans la zone de chauffage du four rotatif et jusqu'à son extrémité, ils se décomposent en de fins granules.

9. Procédé suivant la revendication 8 caractérisé en ce que la dimension d'une briquette est principalement de 1 à 7 cm.

10. Procédé suivant les revendications 8 et 9 caractérisé en ce que la vitesse de chauffage des briquettes, dans la zone de chauffage, est de 9 à 15 °C/min.